# EUROPÄISCHE PATENTANMELDUNG

(11) **EP 2 537 413 A1**
(43) Veröffentlichungstag der Anmeldung: **26.12.2012**
(21) Anmeldenummer: 12173074.1
(22) Anmeldetag: 22.06.2012
(51) Int. Cl.: A01K 1/015

(54) **Einstreu für die Geflügelzucht oder für den Mastdurchlauf in der Geflügelmast**

(30) Priorität: 24.06.2011 AT 9242011
(71) Anmelder: Tschiggerl, Franz, 8492 Halbenrain (AT)
(72) Erfinder: Tschiggerl, Franz, 8492 Halbenrain (AT)
(74) Vertreter: Babeluk, Michael

(57) **Zusammenfassung**

Die Erfindung betrifft eine Einstreu für die Geflügelzucht oder für den Mastdurchlauf in der Geflügelmast, vorzugsweise in der Massentierhaltung, mit zerkleinerten Maisspindeln. Erfindungsgemäß besteht die Einstreu überwiegend aus Maisspinden mit einer Körnung von 8 mm bis 12 mm. Die Einstreu kann mit effektiven Mikroorganismen (EM) versetzt sein, die vorzugsweise Milchsäurebakterien, Hefen und/oder Nichtschwefel-Purpurbakterien enthalten. Damit können im Bereich der intensiven Geflügelhaltung Krankheiten und vor allem Fußverletzungen bei den Tieren minimiert bzw. verhindert werden. Weiters wird eine Verbesserung der gesundheitlichen Situation der Tiere und eine damit einhergehende wirtschaftliche Aufzucht erreicht.

## Beschreibung

Die Erfindung betrifft eine Einstreu für die Geflügelzucht oder für den Mastdurchlauf in der Geflügelmast, eine Verfahren zur Herstellung dieser Einstreu sowie die Verwendung der Einstreu.

Die Erfindung liegt auf dem Gebiet der Geflügelzucht bzw. der Geflügelmast. Geflügel ist dabei ein Oberbegriff für alle Vogelarten, die als Nutztiere gezüchtet und gehalten werden. Die Erfindung umfasst daher insbesondere Hühner, Hähnchen, Truthähne, Enten, Gänse, Tauben und alle damit verbundenen Züchtungen.

Als Mastdurchlauf wird im Folgenden der Zeitraum bezeichnet, in welchen die meist nur wenige Stunden alten Küken in die Stallung gebracht und schließlich nach Erreichung des gewünschten Mastgewichtes zum Zweck der Schlachtung wieder aus dem Stall verbracht werden.

Die Einstreu hat dabei großen Einfluss auf das Wohlbefinden und die Verhaltensentwicklung der Tiere. So ist es ein natürliches Verhalten des Huhnes, zu scharren und am Boden nach Nahrung zu suchen. Die Einstreu soll dabei eine natürliche Bewegung des Tieres nicht behindern.

Die Geflügelzucht erfolgt vor allem zur Gewinnung von Fleisch und Eiern. Die Nachfrage nach diesen Produkten hat in den vergangenen Jahrzehnten bedeutsam zugenommen, da sich vor allem das Geflügelfleisch mittlerweile als hochwertig hervorgetan hat. Dies zeigt sich besonders durch die stabile Marktlage für Geflügelfleisch sowie anhand der weltweit expandierenden Anzahl von Stallungen bzw. Produktionsstätten für diese Produkte. Aufgrund der optimalen Futterverwertung des Geflügels ist es möglich, mit relativ wenig Futtermenge hochwertiges Fleisch zu produzieren. Aufgrund der entsprechenden Nachfrage liegt das Bestreben der Zucht weiterhin tendenziell darin, diese Fleischleistung weiterhin zu verbessern.

Aufgrund des hohen Bedarfes und der immensen Nachfrage nach Geflügelfleisch entwickelten sich in der Vergangenheit automatisierte Massenproduktionsmethoden. Die Intensivmast wird demnach vorwiegend in Form von Bodenhaltung geführt.

Für diese intensive Geflügelzucht gelten weltweit spezielle Haltungsvorschriften und gesetzliche Auflagen. Der Tierschutz erlangt dabei einen immer größeren Stellenwert, was sich vor allen in den Bestrebungen zur Vermeidung von Verhaltensstörungen der Tiere zeigt. Der aktive Tierschutz, der Konsument sowie auch der Produzent legen auf eine artgerechte Haltung und Weiterverarbeitung des Geflügels höchsten Wert. Schließlich ist auch bekannt, dass sich eine artgerechte und vorsorgende Haltung der Tiere positiv auf die Wirtschaftlichkeit der Produktion auswirkt.

Die intensive Geflügelzucht bzw. Geflügelmast steigert das Risiko von Verletzungen und auch daraus resultierenden Erkrankungen. Als häufigste Verletzung bzw. Krankheit eines Masthuhnes können Fußverätzungen festgestellt werden. Diese Verletzungen resultieren daraus, dass üblicherweise Einstreumaterialien verwendet werden, welche nicht die entsprechende Saugleistung aufweisen, so dass das Huhn auf Kot stehen muss. Dies führt zu Verätzungen, welche aufgrund fehlender Nerven am Fußende des Tieres anfangs zu keinen Schmerzen führen. Ist das Huhn jedoch ständig solch einer Feuchtigkeit ausgesetzt, kann der Ballen am Fußinneren angegriffen werden, was zu schmerzhaften und gesundheitsgefährdenden Entzündungen führen kann.

Da sich die schützende Hornhaut der Hühner erst etwa in den ersten sieben bis zehn Tagen bildet, sind vor allem Küken - welche üblicherweise schon im Alter von einem Tag in die Stallungen gelangen - in den ersten Tagen besonders gefährdet und anfällig.

Aus diesen Fußverätzungen können auch weitere Krankheiten resultieren, welche schlussendlich medikamentös - meist durch Antibiotika - behandelt werden müssen. Meist müssen zudem beruhigende und vorbeugende Medikamente eingesetzt werden. Ein Medikamenteneinsatz ist jedoch für den Halter sowie auch für den Konsumenten unerwünscht, da zum Einen auf die Wirtschaftlichkeit der Zucht Bedacht zu nehmen ist und zum Anderen für ein hochwertiges Produkt Medikamentenrückstände im Geflügelfleisch zu vermeiden sind.

Das Bestreben der Geflügelhalter sowie des Tierschutzes ist es daher, die gesundheitliche Situation der Tiere zu verbessern, um damit auch wirtschaftlich ein nachhaltiges und gesundes Produkt gewährleisten zu können. Dies kann nur durch Vermeidung bzw. Ausschließung von verletzenden und schädlichen Einflüssen erreicht werden.

Aus der US 3,059,615 A ist in diesem Zusammenhang eine angesäuerte Einstreu aus Zellulosematerial bekannt geworden, welche einen pH-Wert im Bereich von 2,5 bis 3,5 aufweist und u.A. in der Geflügelzucht verwendet werden kann. Gemäß einer Ausführungsvariante kann das Zellulosematerial im Wesentlichen aus feinem Maiskolbengranulat mit einer Korngröße von 1,68 mm bis 0,84 mm (12 mesh bis 20 mesh) bestehen.

Aus der US 4,519,340 A ist eine Absorptionsmittel für Tierfäkalien, beispielsweise als Einstreu für Hühner und Truthähne bekannt, das aus getrocknetem, zerkleinertem Maisstroh bzw. Maisstängeln mit Kalk und einem organischen Material, beispielsweise Holzwolle, besteht. Die mittlere Länge der Maisstängel und des organischen Materials beträgt gemäß einer Ausführungsvariante zwischen 13 mm und 38 mm.

Weiters ist aus der WO 1998/054956 A1 eine biologisch abbaubare, Klumpen bildende Katzenstreu bekannt, die aus einer Mischung von Bestandteilen größerer und kleinerer Dichte der Maispflanze besteht, wobei einerseits ein Maiskolbengranulat und andererseits Pellets aus leichten Bestandteilen der Maisstängel zu einem Produkt kombiniert werden.

Bekannte und übliche Einstreumaterialien sind weiters Sand, Sägespäne, Stroh, Hanf, Pellets, Brickets etc. sowie synthetisch hergestellte Produkte.

Weiters spielt die bereits erwähnte Saugfähigkeit des Materiales eine erhebliche Rolle. Entscheidend ist dabei, wie sich die Einstreu über einen längeren Zeitraum hinweg im Stall entwickelt, da es bei Stallungen üblich ist, dass ein- und dieselbe Einstreu die gesamte Einstallungsperiode hinweg, den Untergrund bildet. Bei Masthühnern beträgt ein Mastdurchlauf zwischen 32 und 38 Tage, so dass ein adäquater Untergrund durchgehend bestehen muss.

Vor allem in der zweiten Hälfte des Mastdurchlaufes kommt es häufig zu Problemen, da sich aufgrund der Ausscheidungen eine kompakte, krustenartige Schicht über der Einstreu bildet. Ein natürliches Verhalten des Tieres ist kaum mehr möglich, da das Scharren und die Nahrungssuche für das Huhn nutzlos werden.

Auch ist die Luftentwicklung im Stall stark mit dieser sich bildenden Oberschicht der Einstreu verbunden: Unter dieser Schicht bildet sich aufgrund der tierischen Ausscheidungen und vorherrschenden Feuchtigkeit Ammoniak, welcher für Mensch und Tier im Stall wahrnehmbar wird. So kann im Verlauf des Mastdurchlaufes bei den täglichen Kontrollinspektionen wahrgenommen werden, wie sich der Ammoniakgehalt in der Luft kontinuierlich erhöht, da Ammoniakdämpfe besonders Schleimhäute reizen, was sich vor allem durch ein Brennen in den Augen äußert. Auch wird die damit verbundene Geruchsentwicklung beträchtlich erhöht.

Besonders deutlich wird dies, wenn die oben beschriebene Oberschicht der Einstreu durchbrochen wird - beispielsweise beim Entmisten -, so dass die Ammoniak-Dämpfe entweichen können. Um Atemwegserkrankungen vorzubeugen, ist es daher oft nur mit Mundschutz oder anderwärtiger Schutzbekleidung möglich, die Stallung zu betreten.

Durch die meisten Einstreumaterialien kommt es zugleich zur Feinstaubentwicklung, welche auch durch modernste Lüftungsanlagen nicht verhindert werden kann. Auch dieser Faktor spielt eine erhebliche Rolle hinsichtlich der Gesundheit von Mensch und Tier.

Aufgabe der Erfindung ist es eine Einstreu für die Geflügelzucht oder für den Mastdurchlauf in der Geflügelmast dahingehend zu verbessern, dass die Saugfähigkeit optimiert und die Feinstaubentwicklung minimiert werden. Dabei sollen sowohl die Anforderungen des Tierschutzes durch Verbesserung des Gesundheitsschutzes der Tiere während ihrer Aufzucht erfüllt werden, als auch die Wirtschaftlichkeit der Geflügelmast durch Verringerung der auf Verletzungen und Erkrankungen der Tiere basierenden Ausfälle, verbessert werden.

Diese Aufgabe wird erfindungsgemäß dadurch gelöst, dass die Einstreu überwiegend aus Maisspinden mit einer Körnung von 8 mm bis 12 mm besteht. Bevorzugt besteht die Einstreu zu mehr als 70%, besser zu mehr als 90%, aus Maisspindelgranulat der genannten Körnung, wodurch beste Saugfähigkeit bei geringer Staubentwicklung garantiert sind.

Dabei werden die Maisspindeln mit einer Messermühle auf die Körnung von 8 mm bis 12 mm zerkleinert und granuliert, so dass sich die Bestandteile der Maisspindeln gut durchmischen.

Die erfindungsgemäße Einstreu zeichnet sich dadurch aus, dass sie sich schonend auf Füße bzw. Haut des Geflügels auswirkt.

Es hat sich herausgestellt, dass vor allem Masthühner bzw. Küken äußerst positiv auf diese Einstreu reagieren und ihr natürliches Verhalten, wie z.B. das Scharren, Laufen und die artgemäße Futtersuche verstärkt an den Tag legen. Dies liegt vor allem an der bis zum Schluss der Einstallperiode erhaltenen Rieselfähigkeit des Produktes.

Die Verletzungen an den Füßen durch Verätzungen werden auf ein Minimum reduziert, so dass zusätzlicher und unnötiger Medikamenteneinsatz verhindert wird. Den gesetzlichen Vorgaben des Tierschutzes kann somit durch eine natürliche und chemisch unbelastete Einstreu entsprochen werden. Insgesamt führt die erfindungsgemäße Einstreu zu einem erhöhten Wohlbefinden des Geflügels.

Durch den Einsatz dieser Einstreu kommt es zudem zu einer erheblichen Geruchsminimierung der Innen- und Außenluft des Stalles. Nicht nur die Luft im Stall, sondern auch die durch die Lüftung nach außen beförderte Luft ist weniger geruchsintensiv, so dass es allgemein zu einer Verbesserung des durch die Masthaltung verursachten geruchsbelasteten Umgebungsklimas kommt.

Die getrockneten Maisspindeln mit einem Feuchtigkeitsgrad von maximal 14% werden auf eine Partikel- bzw. Granulatgröße von 8 mm bis 12 mm zerkleinert. Die Zerkleinerung erfolgt anhand einer Messermühle, welche je nach gewünschter Granulatgröße mit einer bestimmten Anzahl von Schneidmessern bestückt wird.

Die Messermühle hat sich hierbei als beste Zerkleinerungsmethode herausgestellt, da durch die Zerkleinerung zugleich Feinteile und Granulate verschiedener Größe entstehen, so dass durch die damit verbundene Durchmischung eine außerordentlich hohe Saugfähigkeit der Einstreu erreicht und damit eine trockene Haltung der Tiere gewährleistet wird.

Der Feuchtigkeitsgrad von maximal 14% gewährleistet, dass es zu keiner Verpilzung des Materiales, also zum Auftritt von Pilzbefall, wie etwa Schimmel, kommt. Somit wird eine längerfristige Lagerung der Einstreu unkompliziert möglich. Zudem trocknet das Material nach dem Einstreuen durch die hohen Temperaturen im Stall weiter nach. Bei höheren Feuchtigkeitsgraden käme es zur Gefahr der Verpilzung, welche schädlichen Einfluss auf die Tiere hätte, da dieses Risiko bei höheren Feuchtigkeitsgraden unzweifelhaft gegeben wäre. Auch wäre eine Saugfähigkeit derart, wie bei einem Feuchtigkeitsgrad von maximal 14% nicht gegeben.

Die Zerkleinerung auf eine Granulatgröße von 8 mm bis 12 mm hat sich im Gegensatz zu anderen Größen als optimal herausgestellt. Größere Partikel würden keine ausreichende Saugfähigkeit gewährleisten, da eine für diese Aufnahmefähigkeit von Flüssigkeit notwendige Vermischung der inneren Maisspindelschicht mit der äußeren nicht im ausreichenden Ausmaße erfolgen würde. Zudem würden zu große Granulate das Geflügel vor allem in den ersten Tagen in seiner natürlichen Bewegung behindern, so dass es mit hoher Wahrscheinlichkeit zu Verhaltensstörungen des Tieres kommt. Schließlich kommt auch dem Grundmaterial - der ganzen Maisspindel - in ihrer natürlichen Beschaffenheit keinerlei nennenswerte Saugfähigkeit zu.

Auch eine feinere Körnung wäre als Einstreumittel ungeeignet: Zwar bliebe eine entsprechende Saugfähigkeit erhalten, doch käme es aufgrund von bei der Zerkleinerung übermäßig entstehenden Feinteilen in einer Stallung zu einer unerträglichen Staubentwicklung, welche zu einem für Mensch und Tier unzumutbaren Stallklima führen würde. Eine Regulierung dieses Zustandes ist selbst mit den üblichen Lüftungsanlagen der Stallungen nicht erzielbar. Diese Feinstaubbelastung der Stallluft führt demnach zu einer erheblichen und zwangsläufig eintretenden Gesundheitsgefährdung von Mensch und Tier.

Bei Bedarf kann das Einstreumaterial auch zuvor entstaubt und gesiebt werden, um eine möglichst unbelastete Luft im Stall zu erzielen. Diese ist vor allem geruchsneutral, staubfrei und ammoniakunbelastet.

Trotz der Möglichkeit der Entstaubung des Materiales durch Sieben, kann auch ungesiebte Einstreu verwendet werden, da sich allfällige Feinteile nach dem Einstreuen großteils am Boden absetzen, so dass dadurch ein Ankleben der gesättigten Einstreu am Stallboden verhindert wird. Die Ausbringung des Mistes sowie auch die Reinigung des Stalles werden dadurch im erheblichen Maße erleichtert. Weiters weist die ungesiebte Einstreu aufgrund der Feinteile eine höhere Saugfähigkeit auf.

Das erfindungsgemäße Einstreumaterial ist im Gegensatz zu den bisher verwendeten Materialien, wie z.B. Stroh einfach - ohne sowie bei Bedarf mit maschineller Unterstützung - am Stallboden zu verteilen.

Das Grundmaterial Maisspindel ist - bisher - ein Reststoff der Maiswirtschaft, welcher üblicherweise am Ackerboden belassen wird, auf die Fruchtbarkeit des Bodens allerdings keinerlei Einfluss hat. Es handelt sich dabei im Konkreten um das Restprodukt eines gesamten Maiskolbens, der bei der Ernte von den Körnern befreit wird. Die innere weiße Schicht der Spindel versorgt die Körner der Maispflanzen während der Vegetationsperiode mit Wasser, weshalb sie eine relativ große Wasserspeicherkapazität aufweist um die Körner versorgen zu können.

Der Rohstoff der Maisspindel wurde in der Vergangenheit am Feld belassen, da es keine entsprechende Erntetechnik dafür gab. Mit der Entwicklung neuer Erntemethoden ist es jedoch seit einigen Jahren möglich, die Maisspindel problemlos zu ernten, so dass die Gewinnung dieses Produktes auch zukünftig gesichert ist.

Durch das Zerkleinern der gesamten Maisspindel vermischen sich die außergewöhnlich saugstarken Partikel der Innenschicht mit denen aus der hölzernen Außenschicht, welche ebenfalls eine sehr gute Saugfähigkeit aufweist.

Das Schüttdichte der Einstreu liegt zwischen 250 kg/m³ und 350 kg/m³, vorzugsweise zwischen 300 kg/m³ und 330 kg/m³.

Erfindungsgemäß kann der Einstreu eine wässrige Lösung mit effektiven Mikroorganismen (EM), vorzugsweise eine Mischung die vor allem aus Milchsäurebakterien, Hefen und/oder Nichtschwefel-Purpurbakterien besteht, zugesetzt werden. Es handelt sich dabei um Bakterien, welche positive Auswirkungen auf das Wohlbefinden und die Gesundheit des Geflügels haben. Durch Einsatz von EM kann ein Medikamenteneinsatz abermals reduziert bzw. verhindert werden. Zu diesem Zweck kann beispielsweise ein fermentierter Kräuterextrakt der Firma Multikraft aus Pichl/Wels Austria (www.multikraft.com) eingesetzt werden, bei dessen Fermentation Stoffwechselprodukte wie Kräuteressenzen, organische Säuren, Antioxidantien und Enzyme entstehen. Dadurch werden unerwünschte Organismen in der Einstreu am Wachstum gehemmt und Schadgase (Ammoniak, Lachgas) stark reduziert.

Die Anreicherung mit dieser Flüssigkeit kann vor oder nach dem Einstreuen vorgenommen werden. Erfindungsgemäß werden 1 bis 10 Liter, vorzugsweise 1 bis 3 Liter der wässrige Lösung mit effektiven Mikroorganismen pro m³ Einstreu zugesetzt.

Einen beachtlichen Vorteil stellt die problemlose Entsorgung der gebrauchten Einstreu dar. Aufgrund ihrer biologischen Herkunft kann diese als Kompostbeigabe im Garten oder als Düngemittel für Äcker verwendet werden.

## Patentansprüche

1. Einstreu für die Geflügelzucht oder für den Mastdurchlauf in der Geflügelmast, vorzugsweise in der Massentierhaltung, mit zerkleinerten Maisspindeln, **dadurch gekennzeichnet, dass** die Einstreu überwiegend aus Maisspinden mit einer Körnung von 8 mm bis 12 mm besteht.

2. Eistreu nach Anspruch 1, **dadurch gekennzeichnet, dass** die Schüttdichte der Einstreu 250 kg/m³ bis 350 kg/m³, vorzugsweise 300 kg/m³ bis 330 kg/m³, beträgt.

3. Einstreu nach Anspruch 1 oder 2, **dadurch gekennzeichnet, dass** die Einstreu effektive Mikroorganismen, vorzugsweise eine Mischung die vor allem aus Milchsäurebakterien, Hefen und/oder Nichtschwefel-Purpurbakterien besteht, enthält.

4. Einstreu nach einem der Ansprüche 1 bis 3, **dadurch gekennzeichnet, dass** die Einstreu eine Feuchtigkeit von weniger als 14% aufweist.

5. Verfahren zur Herstellung der Einstreu für die Geflügelzucht oder für den Mastdurchlauf in der Geflügelmast, vorzugsweise in der Massentierhaltung, aus zerkleinerten Maisspindeln, **dadurch gekennzeichnet, dass** die Maisspindeln mit einer Messermühle auf eine Körnung von 8 mm bis 12 mm zerkleinert und granuliert werden.

6. Verfahren nach Anspruch 5, **dadurch gekennzeichnet, dass** die Einstreu nach der Granulierung entstaubt wird.

7. Verfahren nach Anspruch 5 oder 6, **dadurch gekennzeichnet, dass** der Einstreu eine wässrige Lösung mit effektiven Mikroorganismen, vorzugsweise eine Mischung die vor allem aus Milchsäurebakterien, Hefen und/oder Nichtschwefel-Purpurbakterien besteht, zugesetzt wird.

8. Verfahren nach Anspruch 7, **dadurch gekennzeichnet, dass** 1 bis 10 Liter, vorzugsweise 1 bis 3 Liter der wässrige Lösung mit effektiven Mikroorganismen pro m³ Einstreu zugesetzt werden.
